Europäisches Patentamt

European Patent Office

Office européen des brevets

(19)

(11) EP 0 603 188 B1

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(21) Anmeldenummer: **92912805.6**

(22) Anmeldetag: **30.06.1992**

(51) Int Cl.$^6$: **G06F 7/02**, G06F 7/544

(86) Internationale Anmeldenummer:
**PCT/DE92/00542**

(87) Internationale Veröffentlichungsnummer:
**WO 93/05470 (18.03.1993 Gazette 1993/08)**

(54) **DIGITALE LOGIKSCHALTUNG ZUR BESTIMMUNG DES MINIMUMS ODER DES MAXIMUMS VON ZWEI OPERANDEN**

DIGITAL LOGIC CIRCUIT FOR DETERMINING THE MINIMUM OR THE MAXIMUM OF TWO OPERANDS

CIRCUIT LOGIQUE NUMERIQUE POUR DETERMINER LE MINIMUM OU LE MAXIMUM DE DEUX OPERANDES

(84) Benannte Vertragsstaaten:
**DE FR GB IT NL**

(30) Priorität: **04.09.1991 DE 4129423**

(43) Veröffentlichungstag der Anmeldung:
**29.06.1994 Patentblatt 1994/26**

(73) Patentinhaber:
**SIEMENS AKTIENGESELLSCHAFT
D-80333 München (DE)**

(72) Erfinder: **EICHFELD, Herbert
D-80538 München (DE)**

(56) Entgegenhaltungen:
- **PROCEEDINGS 20TH INT. SYMPOSIUM ON MULTIPLE-VALUED LOGIC 23. September 1990, LOS ALAMITOS, CA, USA Seiten 121 - 125 , XP000166618 HAN ET AL 'Comparison Look-Ahead and Design of Fast Fuzzy Operation Units'**
- **EDN ELECTRICAL DESIGN NEWS. Bd. 34, Nr. 13, 22. Juni 1989, NEWTON, MASSACHUSETTS US Seiten 232 - 234 , XP000052891 VANDIVER 'Register performs binary search'**
- **ELECTRONIQUE INDUSTRIELLE Nr. 124, Juni 1969, Seiten 415 - 422 KRAUSENER 'Quelques applications des ADDITIONNEURS T.T.L.'**

**Beschreibung**

Die Erfindung betrifft eine Logikschaltung nach dem Oberbegriff des Patentanspruchs 1.

Eine digitale Logikschaltung dieser Art ist aus der Veröffentlichung mit dem Titel "A VLSI Fuzzy Logic Controller With Reconfigurable, Cascadable Architecture" von H. Watanabe et al aus IEEE Journal of Solid-State Circuits, Volume 25, No. 2, April 1990 (Seite 376 bis 382) bekannt. Dabei handelt es sich um relativ detaillierte Angaben zum Aufbau eines Fuzzy Logic Controllers, wobei unter anderem schaltungstechnische Angaben zur Realisierung von unscharfen Operatoren (Minimum bzw. Maximum) enthalten sind. Die digitalen Logikschaltungen (Minimumbzw. Maximum-Funktion) sind relativ einfach aufgebaut und besitzen eine mehrstufige serielle Struktur, die beginnend mit den LSB's der Eingangsworte und endend mit den MSB's der Eingangsworte erst dann gültige Bits eine Ausgangswortes ermöglichen, wenn das MSB des Ausgangswortes vorliegt.

Aus den Proceedings of the Twentieth International Symposium on Multiple-valued Logic, 23. - 25. Mai 1990, Charlotte, North Carolina, USA, Seiten 121 bis 125, ist eine Maximumschaltung einer schnellen Fuzzy-Verarbeitungseinheit bekannt, die aus kaskadierten Blöcken mit Bit-Komparatoren und Bit-Multiplexern besteht, wobei ein Kleiner-Übertragssignal und ein Gleich-Übertragssignal, beginnend mit dem MSB der Eingangsworte von Stufe zu Stufe bis zum LSB übertragbar ist.

In EDN Electrical Design News, Bd. 34, Nr. 13, 22. Juni 1989, Seiten 232 - 234, VANDIVER: "Register performs binary search" ist ein Komparator offenbart, der aus Komparatoren-Blöcken besteht die über Leitungen für ein Kleiner-Übertragssignal, ein Gleich-Übertragssignal und ein Größer-Übertragssignal verbunden sind, wobei die Eingänge für die Übertragssignale für den Block, der das LSB enthält fest vorgegeben sind und wobei die Übertragssignale von Stufe zu Stufe bis zum Block mit dem MSB übertragbar sind.

Der Erfindung liegt die Aufgabe zugrunde, eine digitale Logikschaltung anzugeben, bei der eine Verarbeitung mit der Verknüpfung der MSB's der beiden Eingangsworte beginnt und weitere Bits des Ausgangswortes mit fallender Wertigkeit zeitlich nacheinander erzeugbar sind und bei der ein möglichst einfacher Aufbau möglich ist.

Die Aufgabe wird erfindungsgemäß durch die im kennzeichnenden Teil des Patentanspruchs 1 angegebenen Merkmale gelöst.

Die Patentansprüche 2 bis 4 sind auf bevorzugte Ausbildungen der erfindungsgemäßen Schaltungsanordnung gerichtet.

Die Erfindung wird nachfolgend anhand der Zeichnung näher erläutert. Dabei zeigt

Figur 1 ein Blockschaltbild einer erfindungsgemäßen digitalen Logikschaltung mit vier Stufen und zwei Übertragsleitungen,

Figur 2 ein Schaltbild einer ungeradzahligen Stufe der digitalen Logikschaltung nach Figur 1 und

Figur 3 ein Schaltbild einer geradzahligen Stufe der digitalen Logikschaltung nach Figur 1.

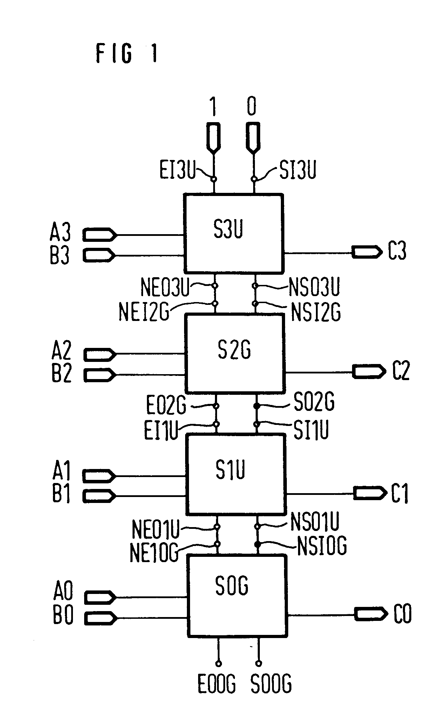

In Figur 1 ist eine erfindungsgemäß digitale Logikschaltung zur Realisierung scharfer Operationen mit vier Stufen SOG, S1U, S2G und S3U mit zwei Übertragungsleitungen dargestellt. Da diese Stufen in Nand/Nor-Technik realisiert sind, sind geradzahlige Stufen SOG und S2G unterschiedlich zu ungeradzahligen Stufen S10 und S30 aufgebaut, um Inverter bzw. Verarbeitungszeit zu sparen.

In der höchstwertigen Stufe S3U wird aus einem höchstwertigen Bit A3 des ersten Eingangswortes, einem höchstwertigen Bit B3 des zweiten Eingangswortes, einem ersten Vergleichs-Eingangssignal EI3U und einem zweiten Vergleichs-Eingangssignal SI3U ein erstes Vergleichs-Ausgangssignal NE03U, ein zweites Vergleichs-Ausgangssignal NSO3U und das höchstwertige Bit C3 des Ausgangswortes erzeugt. Dabei ist ein Eingang für das erste Vergleichs-Eingangssignal EI3U dauerhaft mit logische Eins und ein Eingang für das zweite Vergleichs-Eingangssignal SI3U dauerhaft mit logisch Null belegt, sofern die höchstwertige Stufe ungeradzahlig ist und der Eingang für das erste Vergleichs-Eingangssignal dauerhaft mit logisch Null und der Eingang für das zweite Vergleichs-Eingangssignal dauerhaft mit logisch Eins belegt, sofern die höchstwertige Stufe eine geradzahlige Stufe darstellt. Das erste Vergleichs-Ausgangssignal NE03U wird zum Vergleichs-Eingangssignal NEI2G und das zweite Vergleichs-Ausgangssignal NS03U wird zum zweiten Vergleichs-Eingangssignal NSI2G der nächst niedrigerwertigen geradzahligen Stufe S2G. In der Stufe S2G wird aus den nächst niedrigerwertigen Bits A2 und B2 der beiden Eingangsworte, dem ersten Vergleichs-Eingangssignal NEI2G und dem zweiten Vergleichs-Eingangssignal NSI2G ein erstes Vergleichs-Ausgangssignal E02G und ein zweites Vergleichs-Ausgangssignal S02G neben einem nächst niedrigerwertigen Bit C2 des Ausgangswortes erzeugt. Das erste Vergleichs-Ausgangssignal E02G wird nun zu einem erster Vergleichs-Eingangssignal EI1U und das zweite Vergleichs-Ausgengssignal S02G wird zu einem Vergleichs-Eingangssignal SI1U einer bezüglich der Stufe S2G nächst niedrigerwertigen Stufe S1U. In der Stufe S1U werden aus bezüglich der Bits A2 und B2 nächst niedrigerwertigen Bits A1 und B1 der beiden Eingangsworte, dem ersten Vergleichs-Eingangssignal EI1U und dem zweiten Vergleichs-Eingangssignal SI1U ein Vergleichs-Ausgangssignal NEOIU, ein zweites Vergleichs-Ausgangssignal NSOIU und ein bezüglich des Bits C2 nächst niedrigerwertiges Bit C1 des Ausgangswortes erzeugt. Das erste Vergleichs-Ausgangssignal NEO1U wird zu einem ersten Vergleichs-Eingangssignal NE1OG und das zweite Vergleichs-Ausgangssignal NSO1U wird zu einem zweiten Vergleichs-Eingangssignal NS1OG einer niedrigstwertigen Stufe SOG. In der niedrigstwertigen Stufe SOG wird aus den niedrigstwertigen Bits A0 und A0 der beiden Eingangsworte, dem ersten Vergleichs-Eingangssignal NEIOG und dem zweiten Vergleichs-Eingangssignal NSIOG im allgemeinen Fall ein erstes Vergleichs-Ausgangssignal EOOG und ein zweites Vergleichs-Ausgangssignal SOOG neben einem niedrigstwertigen Bit CO des Ausgangswortes erzeugt, wobei die Erzeugung des ersten Vergleichs-Ausgangssignals EOOG und SOOG bei der niedrigstwertigen Stufe SOG überflüssig ist und die Stufe entsprechend vereinfacht werden kann.

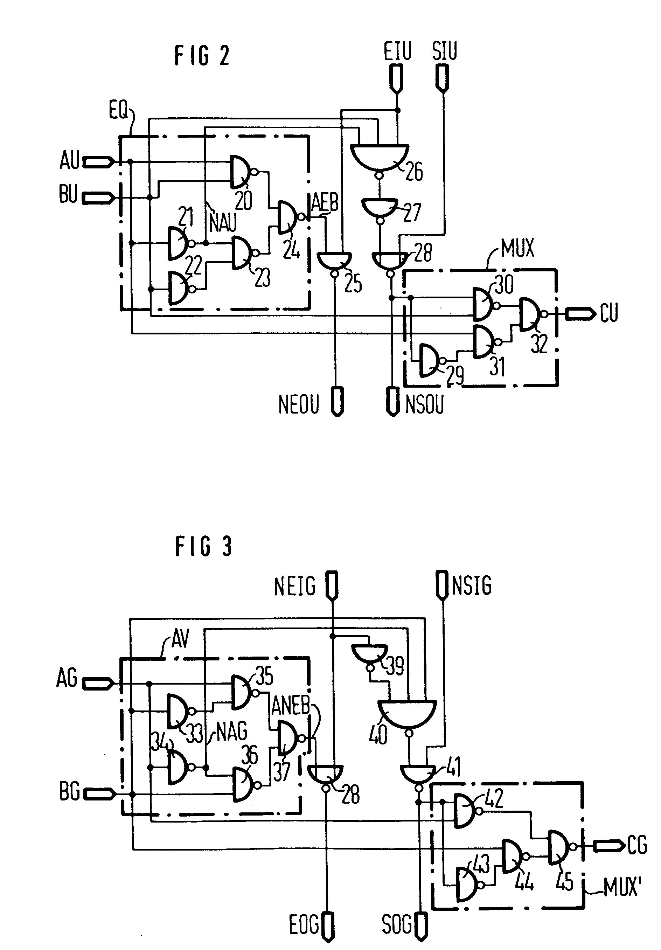

In Figur 2 ist das Schaltbild einer ungeradzahligen Stufe einer erfindungsgemäßen digitalen Logikschaltung gemäß Figur 3 dargestellt. Die Schaltung ist wiederum in Nand/Nor-Technik aufgebaut und beinhaltet eine Äquivalenzverknüpfung EQ und einem Bitmultiplexer MUX, deren Ausgang das jeweilige Bit CU des Ausgangswortes liefert. Die Äquivalenzschaltung EQ besteht aus Invertern 21 und 22 und den Nand-Gattern 20, 23 und 24 und liefert ein Äquivalenzsignal AEB. Der Bitmultiplexer MUX besteht aus einem Inverter 21 und den Nand-Gattern 30, 31 und 32. Das Äquivalenzsignal AEB wird dadurch gebildet, daß im Nand-Gatter 24 die durch das Nand-Gatter 20 verknüpften ungeraden Bits AU und BU der beiden Eingangswörter und die durch das Nanc-Gatter 23 verknüpften invertierten ungeraden Bits AU und BU der beiden Eingangsworte zusammengefaßt werden, wobei die Invertierung des Bits AU durch den Inverter 21 zu einem Signal NAU und die Invertierung des Bits BU über den Inverter 22 erfolgt. Aus einem ersten Vergleichs-Eingangssignal EIU und dem Äquivalenzsignal AEB wird über ein Nand-Gatter 25 ein erstes Vergleichs-Ausgangssignal NEOU gebildet. Das erste Vergleichs-Eingangssignal EIU wird in einem Dreifach-Nand 26 mit dem Bit BU und dem Signal NAU aus der Äquivalenzschaltung EQ verknüpft, anschließend durch einen Inverter 27 invertiert und mit Hilfe eines Nor-Gatters 28 mit einem zweiten Vergleichs-Eingangssignal SIU zu einem zweiten Vergleichs-Ausgangssignal NSOU zusammengefaßt. Das zweite Vergleichs-Ausgangssignal NSOU dient als Steuersignal für den Bitmultiplexer MUX und wird direkt einem Eingang eines Nand-Gatters 30 und über einen Inverter 29 einem Eingang eines Nand-Gatters 31 zugeführt. Das Nand-Gatter 30 besitzt einen zweiten Eingang der mit dem Bit BU und das Nand-Gatter 31 besitzt einen zweiten Eingang der mit dem Bit AU versorgt ist und die beiden Ausgänge der Nand-Gatter 30 und 31 werden durch ein Nand-Gatter 32 zum Multiplexer-Ausgangssignal zusammengefaßt.

Die logischen Funktionen dieser Stufe lauten wie folgt:
$$\text{NEOU}: = \overline{\text{EOU}} : = (\text{AU} = \text{BU}) * \text{EIU}$$
$$\text{NSOU}: = \overline{\text{SOU}} : = \text{AU} * \text{BU} * \text{EIU} + \text{SIU}$$
$$\text{CU} : = \text{A} * \text{SOU} + \text{B} * \overline{\text{SOU}}$$

Das in Figur 3 dargestellte Schaltbild einer geradzahligen Stufe einer erfindungsgemäßen digitalen Logikschaltung zur Realisierung unscharfer Operatoren gemäß Figur 3 zeigt eine ähnliche Struktur wie die in Figur 4 dargestellte ungeradzahlige Stufe. Anstelle des Äquivalenzgatters ist ein Antivalenzgatter AV verwendet und ein Bitmultiplexer MUX' entspricht im Aufbau dem Bitmultiplexer MUX aus Figur 4. Ein Antivalenz-Ausgangssignal ANEB der Antivalenzschaltung AV wird dadurch erzeugt, daß mit Hilfe eines Nand-Gatters 37 ein Ausgangssignal eines Nand-Gatters 35 mit einem Ausgangssignal eines Nand-Gatters 36 verknüpft wird, die Eingangssignale des Nand-Gatters 35 durch ein geradzahliges Bit AG des ersten Eingangswortes und ein durch einen Inverter 33 invertiertes geradzahliges Bit BG eines zweiten Eingangswortes verknüpft sind und daß durch das Nand-Gatter 36 das geradzahlige Bit BG des zweiten Eingangswortes mit dem durch einen Inverter 34 zu einem Signal NAG invertierten geradzahligen Bit des ersten Eingangswortes verknüpft ist. Ein erstes Vergleichs-Eingangssignal NEIG wird durch ein Nor-Gatter 38 mit einem Äquivalenz-Ausgangssignal ANEB zu einem ersten Vergleichs-Ausgangssignal EOG verknüpft. Das erste Vergleichs-Eingangssignal NEIG wird ferner über einen Inverter 39 einem Eingang eines Dreifach-Nands 40 zugeführt und mit dem Signal NAG aus der Antivalenzschaltung AV und mit dem geradzahligen Bit BG verknüpft, das Ausgangssignal der Nand-Schaltung 40 in einer Nand-Schaltung 41 mit einem zweiten Vergleichs-Eingangssignal NSIG zu einem zweiten Vergleichs-Ausgangssignal SOG zusammengefaßt. Das zweite Vergleichs-Ausgangssignal SOG dient zur Ansteuerung des Multiplexers MUX' und wird direkt einem Eingang eines Nand-Gatters 42 und über einen Inverter 43 einem Nand-Gatter 44 zugeführt, wobei die Ausgänge der Nand-Gatter 42 und 44 durch ein Nand-Gatters 45 zusammengefaßt sind und einen Ausgang des Multiplexers MUX' bilden. Ein zweiter Eingang des Nand-Gatters 42 ist dabei mit dem Bit AG und ein zweiter Eingang des Nand-Gatters 44 mit dem Bit BG versorgt.

Die logischen Funktionen dieser Stufe lauten wie folgt:
$$\text{EOG}: = (\text{AG} = \text{BG}) * \text{NEIG} \qquad \text{mit NEIG}: = \overline{\text{EIG}}$$
$$\text{SOG}: = \overline{\text{AG}} * \text{BG} * \text{NEIG} + \text{NSIG} \qquad \text{mit NSIG}: = \overline{\text{SIG}}$$
$$\text{CG}: = \text{A} * \text{SOG} + \text{B} * \overline{\text{SOG}}$$

Die niedrigstwertige Stufe kann dahingehend vereinfacht werden, daß von der Antivalenzschaltung AV nur der Inverter 34 zur Erzeugung des Signals NAG bestehen bleibt und das Nor-Gatter 38 eingespart wird, da bei der niedrigstwertigen Stufe eine Erzeugung des ersten Vergleichs-Ausgangssignals EOG nicht erforderlich ist. Im Falle einer höchstwertigen Stufe läßt sich diese Stufe dadurch vereinfachen, daß das Nor-Gatter 38 durch einen Inverter und das Nand-Gatter 41 durch einen Inverter ersetzt werden. Ferner kann anstelle der Antivalenzschaltung AV mit nachgeschalteten Inverter eine Äquivalenzschaltung treten.

Die in Figur 2 und 3 dargestellten Stufen beziehen sich auf eine Minimum-Funktion, bei der aus einem ersten und einem zweiten Eingangswort das kleinere der beiden Eingangswörter an den Ausgang gelangt. Zur Erzeugung einer Maximum-Funktion sind lediglich die Bits AU und BU beim Multiplexer MUX bzw. die Bits AG und BG beim Multiplexer MUX' zu vertauschen. Die gezeigten digitalen Logikschaltungen sind für eine Wortbreite von vier Bits ausgelegt, die Schaltung ist jedoch für beliebige Wortbreiten geeignet.

**Patentansprüche**

1. Digitale Logikschaltung, bei der mit Hilfe von Bit-Komparatoren und Bitmultiplexer (MUX, MUX') ein Ausgangswort (C0 ... C3) aus einem ersten Eingangswort (A0 ... A3) und einem zweiten Eingangswort (B0 ... B3) bildbar ist, wobei das Ausgangswort an einem Ausgang der Logikschaltung, an Ausgängen der Bitmultiplexer vorliegt, und bei der das Ausgangswort ein Minimum der beiden Eingangswörter darstellt, und bei der die Bits (C0 ... C3) des Ausgangswortes zeitlich nacheinander mit fallender Wertigkeit erzeugbar sind, **dadurch gekennzeichnet,**

   - daß jeweils in einer i-ten Stufe (S2) aus einem i-ten Bit (A2) des ersten Eingangswortes, einem i-ten Bit (B2) des zweiten Eingangswortes, einem ersten Vergleichs-Eingangssignal (NEI2G) von einer nächst höherwertigen i + 1-ten Stufe (S3U) und einem zweiten Vergleichs-Eingangssignal (NSI2G) von einer nächst höherwertigen i + 1-ten Stufe (S3U) ein erstes Vergleichs-Ausgangssignal (E02G) für eine nächst niederwertige i - 1-te Stufe (S1U), ein zweites Vergleichs-Ausgangssignal (S02G) für die nächst niederwertige i-1-te Stufe (S1U) und ein i-tes Bit (C2U) des Ausgangswortes bildbar sind,

   - daß bei einer ungeradzahligen i-ten Stufe (S1U) das erste Vergleichs-Ausgangssignal (NEOU) der ungeradzahligen i-ten Stufe aus einer negierten Und-Verknüpfung (25) des ersten Vergleichs-Eingangssignals (EIU) der i-ten Stufe mit einer Äquivalenz-Verknüpfung (EQ) der i-ten Bits (AU, BU) der beiden Eingangsworte bildbar ist,

   - daß bei der ungeradzahligen i-ten Stufe das zweite Vergleichs-Ausgangssignal (NSOU) der i-ten Stufe aus einer negierten 0der-Verknüpfung (28) des zweiten Vergleichs-Eingangssignals (SIU) mit einer Und-Verknüpfung (26, 27) aus dem i-ten Bit des zweiten Eingangswortes, dem negierten i-ten Bit (NAU) des ersten Eingangswortes und dem ersten Vergleichs-Ausgangssignal (EIU) bildbar ist,

   - daß bei der ungeradzahligen i-ten Stufe ein i-tes Bit (AU) des ersten Eingangswortes mit einem Ausgang des Bitmultiplexers (MUX) der i-ten Stufe verbindbar und ein i-tes Bit (CU) des Ausgangswortes bildbar ist, sofern das zweite Vergleichs-Ausgangssignal (NSOU) der i-ten Stufe den Wert logisch Null annimmt und ein i-tes Bit (BU) des zweiten Eingangswortes mit einem Ausgang des Bitmultiplexers verbindbar und ein i-tes Bit (CU) des Ausgangswortes bildbar ist, sofern das zweite Vergleichs-Ausgangssignal (NSOU) der i-ten Stufe den Wert logisch Eins annimmt,

   - daß bei einer geradzahligen i-ten Stufe (S2G) das erste Vergleichs-Ausgangssignal (EOG) der geradzahligen i-ten Stufe aus einer negierten Oder-Verknüpfung (28) des ersten Vergleichs-Eingangssignals (NEIG) mit einer Äquivalenz-Verknüpfung (AV) der i-ten Bits (AG, BG) der beiden Eingangsworte bildbar ist,

   - daß bei der geradzahligen i-ten Stufe das zweite Vergleichs-Ausgangssignal (SOG) aus einer negierten Und-Verknüpfung (41) des zweiten Vergleichs-Eingangssignals (NSIG) mit einer negierten Und-Verknüpfung (40) aus dem negierten i-ten Bit (NAG) des ersten Eingangswortes, dem i-ten Bit des zweiten Eingangswortes (BG) und dem negierten (39) ersten Vergleichs-Eingangssignal (NEIG) bildbar ist,

   - daß bei der geradzahligen i-ten Stufe mit Hilfe des Bitmultiplexers (MUX') der geradzahligen i-ten Stufe ein i-tes Bit (AG) des ersten Eingangswortes mit einem Ausgang des Bitmultiplexers der i-ten Stufe verbindbar ist, sofern das zweite Vergleichs-Ausgangssignal (SOG) der geradzahligen i-ten Stufe den Wert logisch Eins annimmt, und ein i-tes Bit (BG) des zweiten Eingangswortes mit einem Ausgang des Bitmultiplexers verbindbar ist, sofern das zweite Vergleichs-Ausgangssignal (SOG) der i-ten Stufe den Wert logisch Null annimmt,

   - daß bei einer höchstwertigen Stufe (S3U) ein Eingang für das erste Vergleichs-Eingangssignal (EI3U) mit einer logischen Eins und ein Eingang für das zweite Vergleichs-Eingangssignal (SI3U) mit einer logischen Null ver-

4

sorgt ist, sofern es sich um eine ungeradzahlige Stufe (S1U, S3U) handelt, und ein Eingang für das erste Vergleichs-Eingangssignal mit einer logischen Null und ein Eingang für das zweite Vergleichs-Eingangssignal mit einer logischen Eins versorgt ist, sofern es sich um eine geradzahlige Stufe (SOG, S2G) handelt.

2. Digitale Logikschaltung nach Anspruch 1, **gekennzeichnet durch** die Abänderung, daß die höchstwertige Stufe (S3U) und/oder eine niedrigstwertige Stufe (SOG) derart vereinfacht ausgeführt sind, daß die höchstwertige Stufe (S3U) nur aus einem höchstwertigen Bit (A3) des ersten Eingangswortes und einem höchstwertigen Bit (B3) des zweiten Eingangswortes bildbar ist, sofern die höchstwertige Stufe (S3U) vereinfacht ausgeführt ist, und daß die niedrigstwertige Stufe (SOG) aus einem niedrigstwertigen Bit (A0) des ersten Eingangswortes und einem niedrigstwertigen Bit (B0) des zweiten Eingangswortes, einem ersten Vergleichs-Eingangssignal (NE1OG) und einem zweiten Vergleichs-Eingangssignal (NE20G) der niedrigstwertigen Stufe (SOG) nur ein niedrigstwertiges Bit C0) des Ausgangswortes bildbar ist, sofern die niedrigstwertige Stufe (SOG) vereinfacht ausgeführt ist.

3. Digitale Logikschaltung nach Anspruch 2, **gekennzeichnet durch** die Abänderung, daß das Ausgangswort anstelle eines Minimums ein Maximum der beiden Eingangsworte darstellt und daß beim Bitmultiplexer einer i-ten Stufe das i-te Bit (AU, AG) des ersten Eingangswortes mit dem i-ten Bit (BU, BG) des zweiten Eingangswortes vertauscht ist.


## Claims

1. Digital logic circuit, in which an output word (C0...C3) can be formed from a first input word (A0...A3) and a second input word (B0...B3) with the aid of bit comparators and bit multiplexers (MUX, MUX'), the output word being present at an output of the logic circuit, at outputs of the bit multiplexers, and in which the output word represents a minimum of the two input words, and in which the bits (C0...C3) of the output word can be generated with falling significance sequentially in time, characterized in that

   - it is possible in each case in an i-th stage (S2) to form from an i-th bit (A2) of the first input word, an i-th bit (B2) of the second input word, a first reference input signal (NEI2G) of a next more significant (i + 1)-th stage (S3U) and a second reference input signal (NSI2G) of a next more significant (i + 1)-th stage (S3U) a first reference output signal (E02G) for a next less significant (i - 1)-th stage (S1U), a second reference output signal (S02G) for the next less significant (i - 1)-th stage (S1U) and an i-th bit (C2U) of the output word,

   - in that in the case of an odd-numbered i-th stage (S1U) it is possible to form the first reference output signal (NEOU) of the odd-numbered i-th stage from a negated AND operation (25) of the first reference input signal (EIU) of the i-th stage with an equivalence operation (EQ) of the i-th bit (AU, BU) of the two input words,

   - in that in the case of the odd-numbered i-th stage it is possible to form the second reference output signal (NSOU) of the i-th stage from a negated OR operation (28) of the second reference input signal (SIU) with an AND operation (26, 27) from the i-th bit of the second input word, the negated i-th bit (NAU) of the first input word and the first reference output signal (EIU),

   - in that in the case of the odd-numbered i-th stage it is possible to connect an i-th bit (AU) of the first input word to an output of the bit multiplexer (MUX) of the i-th stage and to form an i-th bit (CU) of the output word, if the second reference output signal (NSOU) of the i-th stage assumes the value logic zero, and to connect an i-th bit (BU) of the second input word to an output of the bit multiplexer and to form an i-th bit (CU) of the output word, if the second reference output signal (NSOU) of the i-th stage assumes the value logic one,

   - in that in the case of an even-numbered i-th stage (S2G) it is possible to form the first reference output signal (EOG) of the even-numbered i-th stage from a negated OR operation (28) of the first reference input signal (NEIG) with an equivalence operation (AV) of the i-th bit (AG, BG) of the two input words,

   - in that in the case of the even-numbered i-th stage it is possible to form the second reference output signal (SOG) from a negated AND operation (41) of the second reference input signal (NSIG) with a negated AND operation (40) from the negated i-th bit (NAG) of the first input word, the i-th bit of the second input word (BG) and the negated (39) first reference input signal (NEIG),

   - in that in the case of the even-numbered i-th stage it is possible with the aid of the bit multiplexer (MUX') of the even-numbered i-th stage to connect an i-th bit (AG) of the first input word to an output of the bit multiplexer of the i-th stage, if the second reference output signal (SOG) of the even-numbered i-th stage assumes the value logic one, and to connect an i-th bit (BG) of the second input word to an output of the bit multiplexer, if the second reference output signal (SOG) of the i-th stage assumes the value logic zero,

- in that in the case of a most significant stage (S3U) an input for the first reference input signal (EI3U) is supplied with a logic one and an input for the second reference input signal (SI3U) is supplied with a logic zero, insofar as an odd-numbered stage (S1U, S3U) is concerned, and an input for the first reference input signal is supplied with a logic zero and an input for the second reference input signal is supplied with a logic one, insofar as an even-numbered stage (S0G, S2G) is concerned.

2. Digital logic circuit according to Claim 1, characterized by the modification that the most significant stage (S3U) and/or a least significant stage (S0G) are designed simplified in such a way that it is possible to form the most significant stage (S3U) only from a most significant bit (A3) of the first input word and a most significant bit (B3) of the second input word, if the most significant stage (S3U) is designed simplified, and that it is possible in the least significant stage (S0G) to form from a least significant bit (A0) of the first input word and a least significant bit (B0) of the second input word, a first reference input signal (NElOG) and a second reference input signal (NE2OG) of the least significant stage (S0G) only a least significant bit (C0) of the output word, if the least significant stage (S0G) is designed simplified.

3. Digital logic circuit according to Claim 2, characterized by the modification that instead of a minimum the output word represents a maximum of the two input words, and that in the case of the bit multiplexer of an i-th stage the i-th bit (AU, AG) of the first input word is interchanged with the i-th bit (BU, BG) of the second input word.

## Revendications

1. Circuit logique numérique qui permet de former, à l'aide de comparateurs binaires (comparateurs de bits) et de multiplexeurs binaires (multiplexeurs de bits) (MUX, MUX'), un mot de sortie (C0 ... C3) à partir d'un premier mot d'entrée (A0 ... A3) et d'un deuxième mot d'entrée (B0 ... B3), le mot de sortie étant présent à une sortie du circuit logique, à des sorties des multiplexeurs binaires, et dans lequel le mot de sortie représente un minimum des deux mots d'entrée et les bits (C0 ... C3) du mot de sortie peuvent être générés successivement dans le temps avec un poids décroissant, caractérisé en ce

- qu'il permet de former, dans un i-ième niveau (S2) à partir d'un i-ième bit (A2) du premier mot d'entrée, d'un i-ième bit (B2) du deuxième mot d'entrée, d'un premier signal d'entrée de comparaison (NEI2G) d'un i-ième niveau +1 de poids directement plus fort (S3U) et d'un deuxième signal d'entrée de comparaison (NSI2G) d'un i-ième niveau +1 de poids directement plus fort (S3U), un premier signal de sortie de comparaison (E02G) pour un i-ième niveau -1 (S1U) de poids directement plus faible, un deuxième signal de sortie de comparaison (S02G) pour le i-ième niveau -1 (S1U) de poids directement plus faible et un i-ième bit (C2U) du mot de sortie,

- que, à un i-ième niveau impair (S1U), le premier signal de sortie de la comparaison (NEOU) du i-ième niveau impair peut être formé à partir d'une opération ET inversé (25) portant sur le premier signal d'entrée de la comparaison (EIU) du i-ième niveau en effectuant une opération d'égalité (EQ) des i-ièmes bits (AU, BU) des deux mots d'entrée,

- que, au i-ième niveau impair, le deuxième signal de sortie de la comparaison (NSOU) du i-ième niveau peut être formé à partir d'une opération OU inversé (28) portant sur le deuxième signal d'entrée de la comparaison (SIU) en effectuant une opération ET (26, 27) à partir du i-ième bit du deuxième mot d'entrée, du i-ième bit inversé (NAU) du premier mot d'entrée et du premier signal de sortie de la comparaison (EIU),

- que, au i-ième niveau impair, un i-ième bit (AU) du premier mot d'entrée peut être combiné avec une sortie du multiplexeur binaire (MUX) du i-ième niveau et qu'un i-ième bit (CU) du mot de sortie peut être formé pour autant que le deuxième signal de sortie de la comparaison (NSOU) du i-ième niveau prenne la valeur ZERO logique et qu'un i-ième bit (BU) du deuxième mot d'entrée peut être combiné avec une sortie du multiplexeur binaire et qu'un i-ième bit (CU) du mot de sortie peut être formé pour autant que le deuxième signal de sortie de la comparaison (NSOU) du i-ième niveau prenne la valeur UN logique,

- que, à un i-ième niveau pair (S2G), le premier signal de sortie de la comparaison (EOG) du i-ième niveau pair peut être formé à partir d'une opération OU inversé (28) du premier signal d'entrée de la comparaison (NEIG) en effectuant une opération d'égalité (AV) des i-ièmes bits (AG, BG) des deux mots d'entrée,

- que, au i-ième niveau pair, le deuxième signal de sortie de la comparaison (SOG) peut être formé à partir d'une opération ET inversé (41) du deuxième signal d'entrée de la comparaison (NSIG) en effectuant une opération ET inversé (40) à partir du i-ième bit inversé (NAG) du premier mot d'entrée, du i-ième bit du deuxième mot d'entrée (BG) et du premier signal d'entrée inversé (39) de la comparaison (NEIG),

- que, au i-ième niveau pair, il est possible, à l'aide du multiplexeur binaire (MUX') du i-ième niveau pair, de combiner un i-ième bit (AG) du premier mot d'entrée avec une sortie du multiplexeur binaire du i-ième niveau pour autant que le deuxième signal de sortie de la comparaison (SOG) du i-ième niveau pair prenne la valeur UN logique et qu'un i-ième bit (BG) du deuxième mot d'entrée peut être combiné avec une sortie du multiplexeur binaire pour autant que le deuxième signal de sortie de la comparaison (SOG) du i-ième niveau prenne la valeur ZERO logique,

- que, à un niveau de poids fort (S3U), une entrée destinée au premier signal d'entrée de la comparaison (EI3U) est alimentée par un UN logique et qu'une entrée destinée au deuxième signal d'entrée de la comparaison (SI3U) est alimentée par un ZERO logique pour autant qu'il s'agisse d'un niveau impair (S1U, S3U) et qu'une entrée destinée au premier signal d'entrée de la comparaison est alimentée par un ZERO logique et qu'une entrée destinée au deuxième signal d'entrée de la comparaison est alimentée par un UN logique pour autant qu'il s'agisse d'un niveau pair (SOG, S2G).

2. Circuit logique numérique selon la revendication 1, caractérisé en ce qu'il a été modifié pour simplifier la réalisation du niveau de poids fort (S3U) et/ou d'un niveau de poids faible (SOG) de manière à pouvoir former le niveau de poids fort (S3U) uniquement à partir d'un bit de poids fort (A3) du premier mot d'entrée et d'un bit de poids fort (B3) du deuxième mot d'entrée dans la mesure où le niveau de poids fort (S3U) est réalisé de manière simplifiée et en ce que, au niveau de poids faible (SOG), seul un bit de poids faible (C0) du mot de sortie peut être formé à partir d'un bit de poids faible (A0) du premier mot d'entrée et d'un bit de poids faible (B0) du deuxième mot d'entrée, d'un premier signal d'entrée de la comparaison (NE1OG) et d'un deuxième signal d'entrée de la comparaison (NE20G) du niveau de poids faible (SOG) dans la mesure où le niveau de poids faible (SOG) est réalisé de manière simplifiée.

3. Circuit logique numérique selon la revendication 2, caractérisé en ce qu'il a été modifié pour que le mot de sortie représente, au lieu d'un minimum, un maximum des deux mots d'entrée et que, pour le multiplexeur binaire d'un i-ième niveau, le i-ième bit (AU, AG) du premier mot d'entrée soit permuté avec le i-ième bit (BU, BG) du deuxième mot d'entrée.

FIG 1

FIG 2

FIG 3